(19) Europäisches Patentamt
European Patent Office
Office européen des brevets

(11) EP 0 738 753 B1

(12) **EUROPÄISCHE PATENTSCHRIFT**

(45) Veröffentlichungstag und Bekanntmachung des Hinweises auf die Patenterteilung:
**24.07.2002 Patentblatt 2002/30**

(51) Int Cl.[7]: **C08K 7/14**, C08L 69/00

(21) Anmeldenummer: **96105541.5**

(22) Anmeldetag: **09.04.1996**

(54) **Kurzglasfaserverstärkte Polycarbonate**

Polycarbonates reinforced with chopped glas fibres

Polycarbonates renforcés avec des fibres de verre coupées

(84) Benannte Vertragsstaaten:
**BE DE ES FR GB IT NL**

(30) Priorität: **21.04.1995 DE 19514770**

(43) Veröffentlichungstag der Anmeldung:
**23.10.1996 Patentblatt 1996/43**

(73) Patentinhaber: **BAYER AG**
**51368 Leverkusen (DE)**

(72) Erfinder:
- **Köhler, Burkhard, Dr.**
  **51373 Leverkusen (DE)**
- **Horn, Klaus, Dr.**
  **41539 Dormagen (DE)**
- **Mazanek, Jan, Dr.**
  **51061 Köln (DE)**
- **Käsler, Karl-Heinz**
  **51467 Bergisch Gladbach (DE)**

(56) Entgegenhaltungen:
**EP-A- 0 566 952**
**DE-A- 2 518 287**
**DE-A- 2 832 342**
**DE-A- 2 854 136**
**US-A- 4 568 712**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 738 753 B1

Printed by Jouve, 75001 PARIS (FR)

## Beschreibung

Die Erfindung betrifft Mischungen aus kurzglasfaserverstärkten Polycarbonaten und Polyethersilikonen, die sich durch eine verbesserte Zähigkeit auszeichnen.

Die DE-OS 2 518 287 beschreibt die Verbesserung der mechanischen Werte von glasfaserverstärkten Polycarbonaten durch OH-terminierte Silikone. Mit 2 Gew.-% dieser Silikone konnte die Schlagzähigkeit eines Compounds mit 20 Gew.-% Kurzglasfaser auf 80 $kJ/m^2$ verbessert werden. Für manche Anwendungen reicht jedoch diese Schlagzähigkeit nicht aus.

Es bestand daher die Aufgabe, kurzglasfaserverstärkte Polycarbonate mit noch besserer Zähigkeit herzustellen.

Es wurde nun gefunden, daß die Schlagzähigkeit kurzglasfaserverstärkter Polycarbonate mit geringen Mengen an Polyethersilikonen eine gegenüber dem Stand der Technik verbesserte Schlagzähigkeit aufweisen.

Gegenstand der Erfindung sind daher Mischungen enthaltend

A) 45 bis 97 Gew.-%, vorzugsweise 68 bis 94,5 Gew.-% Polycarbonate,

B) 2 bis 50 Gew.-%, vorzugsweise 5 bis 30 Gew.-% Kurzglasfasern mit einer mittleren Faser länge von 150µm bis 300µm und einem Durchmesser von 8µm bis 15 µm

C) 0,1 bis 5 Gew.-% Polyethersilikone der Formel (I)

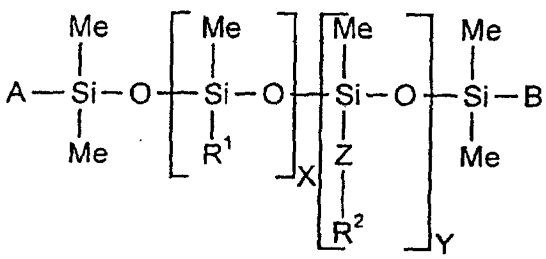

(I),

darin bedeuten:

$R^1$ Alkylgruppe mit 1 bis 30 C-Atomen, wobei bis zu 20 Gew.-% dieser Alkylgruppen ersetzt sein können durch Phenyl- und/oder Aralkyl-Gruppen, die jeweils durch eine oder mehrere Methylgruppen substituiert sein können, wobei die Alkylteile der Aralkylgruppen 1 bis 3 Kohlenstoffatome enthalten können,

A $-CH_3$ oder $R^2$-Z-,

B $-CH_3$ oder $R^2$-Z-,

$R^2$ einen Polyetherrest mit einem mittleren Molekulargewicht von 200 bis 3.000, vorzugsweise einen Polyethylenoxidrest oder einen Polypropylenoxidrest oder · einen Polyethylenoxidpropylenoxidrest, der durch $C_1$-$C_6$-Alkoxy-, OH-, Ester- oder Carbamatgruppen terminiert ist,

Z eine Alkylengruppe, die das Siliciumatom mit der Gruppe $R^2$ verbindet, vorzugsweise eine 1,3-Propylengruppe,

$$-CH_2CH_2-CH_2-,$$

x 1 bis 20, vorzugsweise 2 bis 7,

y 0 bis 50, vorzugsweise 1 bis 20,

wobei das durchschnittliche Molekül eine Gruppe $R^2$-Z- enthält und das Verhältnis der Zahl der Gruppen $R^2$-Z- zu der Zahl x 1:2 bis 1:40 beträgt,

bezogen jeweils auf 100 Gew.-% der Summe der Komponenten A) + B) +C).

Komponente A)

Die erfindungsgemäß geeigneten, thermoplastischen Polycarbonate gemäß Komponente A) können sowohl Homo- als auch Copolycarbonate aus den Diphenolen der Formel (1) sein,

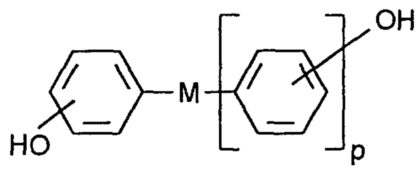

(1),

worin

p 1 oder Null ist und

M eine Einfachbindung, $C_1$-$C_5$-Alkylen, $C_2$-$C_5$-Alkyliden, gegebenenfalls durch Methylgruppen substituiertes $C_5$-$C_6$-Cycloalkyliden, -O-, -S- und -$SO_2$- sein können.

Die Polycarbonate gemäß Komponente A) können sowohl linear als auch verzweigt sein, sie können aromatisch gebundene Methylgruppen enthalten und sind halogenfrei. Die Polycarbonate der Komponente A) können sowohl einzeln als auch im Gemisch eingesetzt werden.

Die Diphenole der Formel (1) sind entweder literaturbekannt oder nach literaturbekannten Verfahren herstellbar. Die Herstellung der erfindungsgemäß geeigneten Polycarbonate gemäß Komponente A) ist ebenfalls literaturbekannt und kann z.B. mit Phosgen nach dem Phasengrenzflächenverfahren oder mit Phosgen nach dem Verfahren in homogener Phase (dem sogenannten Pyridinverfahren) erfolgen. wobei das jeweils einzustellende Molekulargewicht in bekannter Weise durch eine entsprechende Menge an bekannten Kettenabbrechern erzielt wird.

Geeignete Diphenole der Formel (1) sind z.B. Hydrochinon, Resorcin, 4,4'-Dihydroxydiphenyl, 2,2-Bis(4-hydroxyphenyl)-propan (Bisphenol A), 2,4-Bis-(4-hydroxyphenyl)-2-methylbutan, 2,2-Bis-(4-hydroxy-3,5-dimethylphenyl)-propan, 1,1-Bis-(4-hydroxyphenyl)-cyclohexan oder 1,1-Bis-(4-hydroxyphenyl)-3,3,5-trimethylcyclohexan. Bevorzugte Diphenole der Formel (1) sind 2,2-Bis-(4-hydroxyphenyl)-propan und 1,1-Bis-(4-hydroxyphenyl)-3,3,5-trimethylcyclohexan. Es können auch Mischungen von Diphenolen eingesetzt werden, z.B. aus Bisphenol A und bis zu 60 Mol-% 1,1-Bis-(4-hydroxyphenyl)-3,3,5-trimethylcyclohexan.

Geeignete Kettenabbrecher sind z.B. Phenol oder p-tert.-Butylphenol, aber auch langkettige Alkylphenole wie 4-(1,3-Tetramethyl-butyl)-phenol gemäß DE-OS 2 842 005 oder Monoalkylphenole oder Dialkylphenole mit insgesamt 8 bis 20 C-Atomen in den Alkylsubstituenten gemäß deutscher Offenlegungsschrift 3 506 472, wie z.B. p-Nonylphenol, 2,5-di-tert.-Butylphenol, p-tert.-Octylphenol, p-Dodecylphenol, 2-(3,5-Dimethylheptyl)-phenol und 4-(2,5-Dimethylheptyl)-phenol. Die Menge an einzusetzenden Kettenabbrechern beträgt im allgemeinen zwischen 0,5 und 10 Mol-%, bezogen auf die Summe der jeweils eingesetzten Diphenole (1).

Die erfindungsgemäß geeigneten Polycarbonate gemäß Komponente A) können in bekannter Weise verzweigt sein, und zwar vorzugsweise durch den Einbau von 0,05 bis 2,0 Mol-%, bezogen auf die Summe der eingesetzten Diphenole, an dreioder mehr als dreifunktionellen Verbindungen, z.B. solchen mit drei oder mehr als drei phenolischen OH-Gruppen.

Die erfindungsgemäß geeigneten Polycarbonate haben mittlere Gewichtsmolekulargewichte $\overline{M}_w$, gemessen z.B. durch Ultrazentrifugation oder Streulichtmessung von 10.000 bis 200.000, vorzugsweise von 20.000 bis 80.000.

Komponente B)

Kurzglasfasern sind gemahlene Glasfasern mit einer mittleren Faserlänge von 150 µm bis 300 µm, vorzugsweise von 200 µm bis 260 µm insbesondere von 230 µm, einem Durchmesser von 8 µm bis 15 µm, vorzugsweise von 10 µm und einem Pulverteil (< 50 µm) bis zu 10 Gew.-%. Als Glasmaterial ist alkalifreies Aluminium-Bor-Silikat-Glas (E-Glas) bevorzugt. Die Kurzglasfasern sind vorzugsweise geschlichtet, z.B. mit der in der DE-AS 1 201 991 beschriebenen Wasserschlichte.

Komponente C)

Polyethersilikone enthalten als Polysilikon Dialkylsiloxaneinheiten, wobei vorzugsweise mindestens eine, besonders bevorzugt zwei Alkylgruppen gleich Methyl sind, und als Polyether Ethylenoxid- und/oder Propylenoxideinheiten, wobei die Polyether chemisch an die Polysilikone angebunden sind.

Die Polyethersilikone entsprechen der Formel (I)

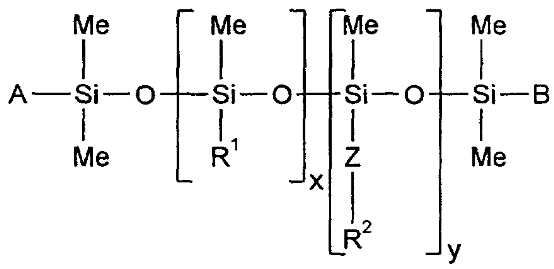

(I).

Darin bedeuten:

$R^1$ Alkylgruppe mit 1 bis 30 C-Atomen, wobei bis zu 20 Gew.-% dieser Alkylgruppen ersetzt sein können durch Phenyl- und/oder Aralkyl-Gruppen, die jeweils durch eine oder mehrere Methylgruppen substituiert sein können, wobei die Alkylteile der Aralkylgruppen 1 bis 3 Kohlenstoffatome enthalten können,

A $-CH_3$ oder $R^2$-Z-,

B $-CH_3$ oder $R^2$-Z-,

$R^2$ einen Polyetherrest mit einem mittleren Molekulargewicht von 200 bis 3.000, vorzugsweise einen Polyethylenoxidrest oder einen Polypropylenoxidrest oder einen Polyethylenoxidpropylenoxidrest, der durch $C_1$-$C_6$-Alkoxy-, OH-, Ester- oder Carbamatgruppen terminiert ist,

Z eine Alkylengruppe, die das Siliciumatom mit der Gruppe $R^2$ verbindet, vorzugsweise eine 1,3-Propylengruppe, $-CH_2-CH_2-CH_2-$,

x 1 bis 20, vorzugsweise 2 bis 7,

y 0 bis 50, vorzugsweise 1 bis 20,

wobei das durchschnittliche Molekül eine Gruppe $R^2$-Z- enthält und das Verhältnis der Zahl der Gruppen $R^2$-Z- zu der Zahl x 1:2 bis 1:40 beträgt.

Wenn A und B jeweils für eine $R_2$-Z- stehen, ist es zweckmäßig, daß y für 0 steht. Dabei ist es wiederum bevorzugt, daß das Verhältnis der Zahl der Gruppen $R_2$-Z- zur Zahl x im Bereich von 1:3 bis 1:40, vorzugsweise 1:3 bis 1:15 liegt.

Wenn A und B jeweils für die Gruppe $CH_3$- stehen, ist y zweckmäßig eine Zahl von 1 bis 20. In diesem Fall ist es bevorzugt, daß das Verhältnis der Zahl der Gruppen $R_2$-Z- zur Zahl x im Bereich 1:2 bis 1:7 liegt. Dieser Typ ist besonders bevorzugt.

Um die erfindungsgemäß zu verwendenden Silikone (I) herzustellen, können funktionelle Siloxane, wie sie z.B. durch die folgenden Formeln (II) bis (VI) dargestellt sind (vgl. EP-A 0 083 733), zur Reaktion gebracht werden:

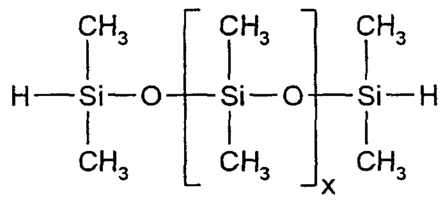

(II)

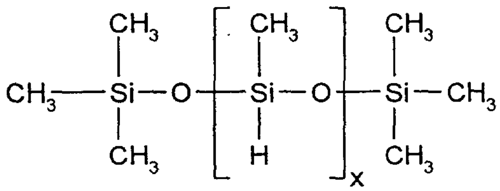

(III)

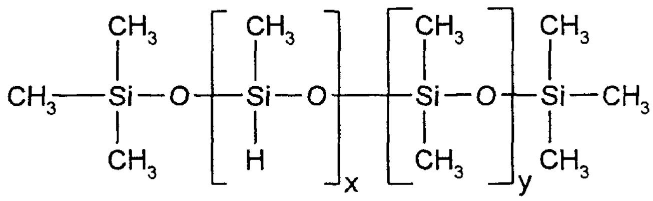

(IV)

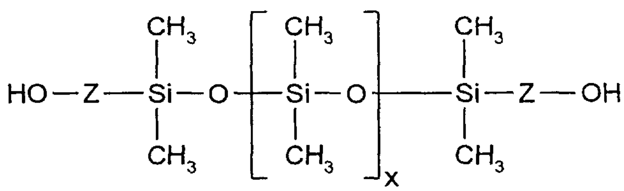

(V)

Produkt V ist erhältlich durch Hydrosilylierung von II mit Allylalkohol. Dann ist Z 1,3-Propylen.

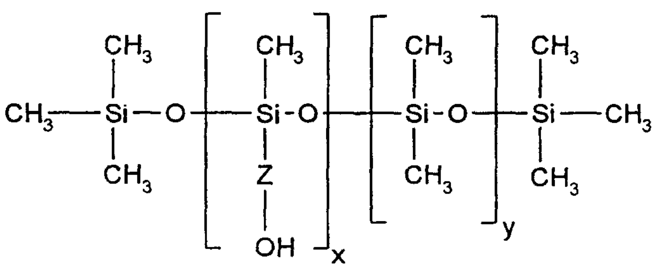

(VI)

Produkt VI ist erhältlich durch Hydrosilylierung von IV mit Allylalkohol. Dann ist Z ebenfalls 1,3-Propylen.

Die polyethergepfropften Silikone der Formel (I) können noch OH-Gruppen enthalten oder nicht.

Die Silikone der Formel (I) sind einerseits erhältlich durch Hydrosilylierungsreaktionen der SiH-funktionellen Siloxane der Formeln (II) oder (III) oder (IV) mit Polyethern der Formel (VII)

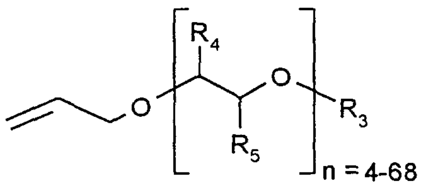

(VII)

wobei

$R^4$ und $R^5$ für Wasserstoff oder $C_1$-$C_6$-Alkyl stehen und einer der Reste $R^4$ oder $R^5$ gleich Wasserstoff sein muß und

$R^3$ für $C_1$-$C_6$-Alkyl, $C_7$-$C_{14}$-Aralkyl, $C_6$-$C_{14}$-Aryl, für einen Acylrest oder Carbamoylrest steht.

Die Polyether der Formel (VII) selbst sind erhältlich durch anionische Polymerisation von Ethylenoxid und/oder Propylenoxid, gestartet auf Allylalkohol und anschließender Umsetzung mit Alkylierungs-, Acylierungsreagenzien oder mit Isocyanaten, oder gestartet auf gesättigten Alkoholen oder Phenolen und anschließender Umsetzung mit Allylhalogeniden.

Die polyethergepfropften Silikone der Formel (I) sind anderseits erhältlich durch anionische Polymerisation von Ethylenoxid und/oder Propylenoxid, gestartet auf hydroxyfunktionellen Siloxanen der Formeln (V) oder (VI) und anschließender Umsetzung mit Alkylierungs- oder Acylierungsreagenzien oder Isocyanaten.

Die so hergestellten Silikone haben keine OH-Gruppen.

Die Umsetzung der Siloxane (II), (III) oder (IV) mit Polyethern der Formel (VII), worin $R_3$ = H, führt nicht nur unter Addition der Vinylgruppe von (VII) an die Si-H-Bindungen von (II), (III) oder (IV) und damit zu Verbindungen der Formel (I) mit OH-Gruppen, sondern auch unter Reaktion der OH-Gruppe von (VII) mit den Si-H-Bindungen von (II), (III) oder (IV) unter Wasserstoff-Entwicklung zu mehr verzweigten Polyethersilikonen mit höherem Molekulargewicht als dem der Verbindungen (I).

Solche verzweigte Polyethersilikone sind ganz bevorzugte Komponenten C).

Noch vorhandene freie OH-Gruppen in diesen verzweigten Polyethersilikonen können in üblicher Weise verestert werden, beispielsweise mit Acetylchlorid.

Die Herstellung der erfindungsgemäßen Mischungen aus den Komponenten A), B) und C) erfolgt in der Schmelze, vorzugsweise in Knetern oder Extrudern bei Temperaturen von 220°C bis 340°C.

Gegenstand der vorliegenden Erfindung ist somit auch ein Verfahren zur Herstellung der erfindungsgemäßen Mischungen, das dadurch gekennzeichnet ist, daß man die Komponenten A), B) und C) in der Schmelze, vorzugsweise in Knetern oder Extrudern, bei Temperaturen von 220°C bis 340°C mischt.

Die erfindungsgemäßen Mischungen können in bekannter Weise zu beliebigen Formkörpern verarbeitet werden.

Diese Formkörper finden überall dort Einsatz, wo bislang glasfaserverstärkte Polycarbonate eingesetzt wurden, also beispielsweise für Artikel im Bereich der Elektrik, der Haushaltsgeräte und der Automobilherstellung.

__Beispiele__

I. Die Komponenten

IA. Polycarbonat aus 2,2-Bis-(4-hydroxyphenyl)-propan mit einer relativen Lösungsviskosität von 1,28 (gemessen in 0,5%iger $CH_2Cl_2$-Lösung bei 25°C).

IB. E-Glasfaser (Kurzglasfaser) mit einer mittleren Faserlänge von 230 µm, einem Durchmesser von 10 µm und einem Pulveranteil (< 50 µm) von 5 Gew.-% (übliches Handelsprodukt).

IC. Polyethersilikon der Formel (I) mit $R^1$, A und B = $CH_3$, mit x = 1, y = 3 und mit einem Polyetherrest $R^2$ aus 13 Ethylenoxid und 4-Propylenoxideinheiten. Das Polyethersilikon ist geringfügig über die OH-Gruppe des Polyethersegments verzweigt.

Dieses Polyethersilikon wird wie folgt hergestellt:
Die Mischung aus 862 g des Polyethers

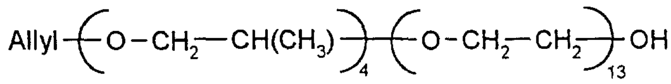

und 364 g eines Siloxans der Formel IV mit x = 1 und y = 3 und 0,025 g Hexachloroplatinsäure wird unter kräftigem Rühren 24 h auf 110°C erhitzt.

**Beispiel 1**

Man mischt 79 Gew.-% Komponente IA) mit 20 Gew.-% Komponente IB) und mit 1 Gew.-% Komponente IC) bei 280°C auf einer ZSK 32 und stellt in bekannter Weise ein Granulat her. An Normkleinstäben dieses Granulats wird in bekannter Weise (DIN 53453) die Schlagzähigkeit gemesssen. Ergebnis: Nicht gebrochen.

**Vergleichsbeispiel gemäß DE-OS 2 518 287**

Man verfährt wie in Beispiel 1, setzt aber als Komponente C) 1 Gew.-% eines OH-terminierten Polydimethylsiloxans des Molgewichts 2 740 g/mol, gemäß Lehre der DE-OS 2 518 287 ein. Dieses Silikon wird hergestellt durch 24stündige Reaktion von 200 ml Octamethylcyclotetrasiloxan mit 37 g $H_2SO_4$ konz. in 100 ml Diethylether bei Raumtemperatur. Die Aufarbeitung erfolgte durch ausschütteln mit Wasser, trocknen über $K_2CO_3$ und entfernen leichtflüchtiger Komponenten bei 310°C.

Aus dem Granulat erhaltene Normkleinstäbe haben gemäß DIN 53453 die Schlagzähigkeit von 80 kJ/$m^2$.

**Vergleichsbeispiel ohne Silikonzusatz**

Man mischt gemäß Beispiel 1 80 Gew.-% Komponente IA) mit 20 Gew.-% Komponente IB). Die Schlagzähigkeit nach DIN 53453 beträgt 59 kJ/$m^2$.

**Patentansprüche**

1. Mischungen enthaltend

    A) 45 bis 97 Gew.-% Polycarbonate,

    B) 2 bis 50 Gew.-% Kurzglasfasern mit einer mittleren Faserlänge von 150 µm bis 300 µm und einem Durchmesser von 8 µm bis 15 µm,

    C) 0,1 bis 5 Gew.-% Polyethersilikone der Formel (I)

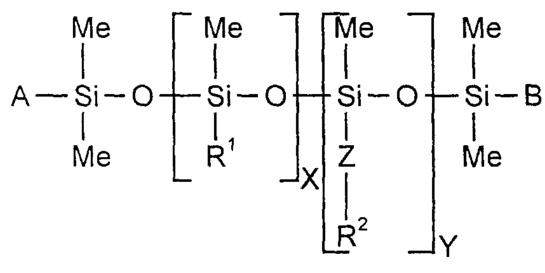

(I),

darin bedeuten:

$R^1$ Alkylgruppe mit 1 bis 30 C-Atomen, wobei bis zu 20 Gew.-% dieser Alkylgruppen ersetzt sein können durch Phenyl- und/oder Aralkyl-Gruppen, die jeweils durch eine oder mehrere Methylgruppen substituiert sein können, wobei die Alkylteile der Aralkylgruppen 1 bis 3 Kohlenstoffatome enthalten können,

A $-CH_3$ oder $R^2$-Z-,

B $-CH_3$ oder $R^2$-Z-,

$R^2$ einen Polyetherrest mit einem mittleren Molekulargewicht von 200 bis 3.000, vorzugsweise einen Polyethylenoxidrest oder einen Polypropylenoxidrest oder einen Polyethylenoxidpropylenoxidrest, der durch $C_1$-$C_6$-Alkoxy-, OH-, Ester- oder Carbamatgruppen terminiert ist,

Z eine Alkylengruppe, die das Siliciumatom mit der Gruppe $R^2$ verbindet, vorzugsweise eine 1,3-Propylengruppe, $-CH_2-CH_2-CH_2-$,

x 1 bis 20, vorzugsweise 2 bis 7,

y 0 bis 50, vorzugsweise 1 bis 20,

wobei das durchschnittliche Molekül eine Gruppe $R^2$-Z- enthält und das Verhältnis der Zahl der Gruppen $R^2$-Z- zu der Zahl x 1:2 bis 1:40 beträgt,
bezogen jeweils auf 100 Gew.-% der Summe der Komponenten A) + B) +C).

**2.** Verfahren zur Herstellung der Mischungen nach Anspruch 1, **dadurch gekennzeichnet, dass** man die Komponenten A), B) und C) in der Schmelze bei Temperaturen von 220°C bis 340°C mischt.

**3.** Verwendung der in Anspruch 1 definierten Mittel zur Herstellung von Formkörper.

**4.** Formkörper enthaltend Mischungen wie ein Anspruch 1 definiert.

**5.** Verwendung von Polyethersilikonen der Formel I wie in Anspruch 1 definiert zur Schlagzähigkeitsverbesserung von Produkten auf Basis von Polycarbonat.

**Claims**

**1.** Mixtures containing

A) 45 to 97 wt.% of polycarbonates,

B) 2 to 50 wt.% of short glass fibres having an average fibre length of 150 µm to 300 µm and a diameter of 8 µm to 15 µm,

C) 0.1 to 5 wt.% of polyether silicones corresponding to formula (I),

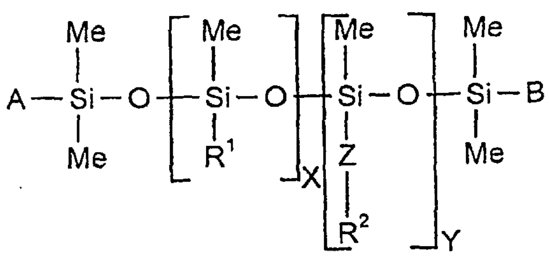

(I),

wherein:

$R^1$ denotes an alkyl group having 1 to 30 C atoms, with up to 20 wt.% of these alkyl groups being replaceable by phenyl groups and/or aralkyl groups, which may in each case be substituted by one or more methyl groups, while the alkyl moieties of the aralkyl groups may contain 1 to 3 carbon atoms,

A denotes $-CH_3$ or $R^2$-Z-,

B denotes $-CH_3$ or $R^2$-Z-,

$R^2$ denotes a polyether group having an average molecular weight of from 200 to 3,000, preferably a polyethylene oxide group or a polypropylene oxide group or a polyethylene oxide propylene oxide group, which is terminated by $C_1$-$C_6$ alkoxy, OH-, ester or carbamate groups,

Z denotes an alkylene group, which bonds the silicon atom to the group $R^2$, preferably a 1,3-propylene group, $-CH_2-CH_2-CH_2-$,

x represents 1 to 20, preferably 2 to 7,

y represents 0 to 50, preferably 1 to 20,

wherein the average molecule contains a group $R^2$-Z- and the ratio of the number of groups $R^2$-Z- to the number x amounts to 1:2 to 1:40,
in each case referred to 100 wt.% of the sum of the components A) + B) + C).

**2.** Process for the preparation of mixtures according to claim 1, **characterised in that** the components A), B) and C) are mixed in the melt at temperatures of from 220°C to 340°C.

**3.** Use of the agent defined in claim 1 for the production of mouldings.

**4.** Mixtures containing mouldings as defined in claim 1.

**5.** Use of polyether silicones corresponding to formula I, as defined in claim 1, for improving the impact strength of products based on polycarbonate.

**Revendications**

**1.** Mélanges contenant

A) des polycarbonates à concurrence de 45 à 97 % en poids,

B) des courtes fibres de verre à concurrence de 2 à 50 % en poids, possédant une longueur de fibre moyenne de 150 µm à 300 µm et un diamètre de 8 µm à 15 µm,

C) des polyéthersilicones à concurrence de 0,1 à 5 % en poids, répondant à la formule (I)

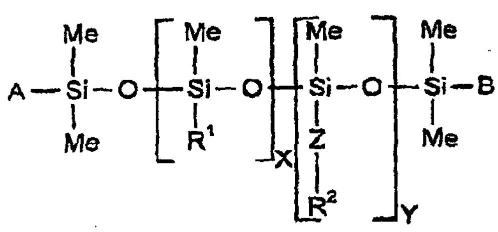

(I),

dans laquelle

$R^1$ représente un groupe alkyle contenant de 1 à 30 atomes de carbone, ces groupes alkyle pouvant être remplacés, jusqu'à concurrence de 20 % en poids, par des groupes phényle et/ou des groupes aralkyle qui peuvent porter respectivement un ou plusieurs substituants méthyle, les fractions alkyle des groupes aralkyle pouvant contenir de 1 à 3 atomes de carbone,

A représente un groupe $-CH_3$ ou un groupe $R^2$-Z-,

B représente un groupe $-CH_3$ ou un groupe $R^2$-Z-,

$R^2$ représente un résidu de polyéther possédant un poids moléculaire moyen de 200 à 3000, de préférence un résidu d'oxyde de polyéthylène ou un résidu d'oxyde de polypropylène ou encore un résidu d'oxyde de polyéthylène-oxyde de propylène, qui porte, à titre de groupe terminal, un groupe alcoxy en $C_1$-$C_6$, un groupe OH, un groupe ester ou un groupe carbamate,

Z représente un groupe alkylène qui relie l'atome de silicium au groupe $R^2$, de préférence un groupe 1,3-propylène, un groupe $-CH_2-CH_2-CH_2-$,

x représente un nombre de 1 à 20, de préférence de 2 à 7,

y représente un nombre de 0 à 50, préférence de 1 à 20,

la molécule moyenne contenant un groupe $R^2$-Z- et le rapport du nombre des groupes $R^2$-Z- au nombre x s'élève de 1 : 2 à 1:40,

rapportés respectivement à 100 % de la somme des composants A) + B) +C).

**2.** Procédé pour la préparation des mélanges selon la revendication 1, **caractérisé en ce qu'**on mélange les composants A), B) et C) dans la masse fondue à des températures de 220 °C à 340 °C.

**3.** Utilisation des agents définis à la revendication 1 pour la préparation de corps moulés.

**4.** Corps moulés contenant des mélanges tels que définis à la revendication 1.

**5.** Utilisation de polyéthersilicones répondant à la formule (I) telle que définie à la revendication 1 pour l'amélioration de la résistance aux chocs manifestée par des produits à base de polycarbonates.